# EUROPEAN PATENT SPECIFICATION

(11) **EP 3 482 089 B1**
(45) Date of publication and mention of the grant of the patent: **05.08.2020**
(21) Application number: 17728752.1
(22) Date of filing: 01.06.2017
(51) Int. Cl.: F16B 21/02, F16B 5/06

(54) **FIXING FASTENER WITH A TORSION BAR AND ITS PRODUCTION METHOD**
BEFESTIGUNGSELEMENT MIT EINEM TORSIONSSTAB UND DESSEN HERSTELLUNGSVERFAHREN
ATTACHE DE FIXATION AVEC BARRE DE TORSION ET SON PROCÉDÉ DE PRODUCTION

(30) Priority: 08.07.2016 FR 1656576
(43) Date of publication of application: 15.05.2019
(73) Proprietor: Illinois Tool Works, Inc., Glenview, Illinois 60025 (US)
(72) Inventor: LEVERGER, Eric, Glenview, IL 60025 (US)
(74) Representative: HGF
(86) International application number: PCT/US2017/035344
(87) International publication number: WO 2018/009288

(56) References cited:
- FR-A1- 3 020 099
- US-A- 5 632 586

## Description

### TECHNICAL FIELD

The present invention relates to a fixing fastener with a torsion bar and its production method.

### BACKGROUND

In practice, it is known to use a fastener of this type in order to replace a screw system, in particular in order to secure interior trimmings of vehicles or housings below the vehicle body. The screw system comprises for example a part made of plastic material known as a grommet, and a metal screw. The grommet is assembled on the support, then the screw is fixed into this grommet, through the panel to be secured, by means of the action of a screw driving machine.

Document FR-A1-2 789 455 describes an example of a fixing fastener which is molded in a single piece of plastic material. The fastener comprises a rigid core, as well as two curved flexible wings which are linked to the core. Each wing can bend by plastic deformation, in order to allow the fastener to be snapped into a hole in the panel.

Document FR-A1-3 020 099 describes an improved fastener with a torsion bar. This fastener is simple and convenient to implement. The fastener can be prepositioned on an element to be fixed, then implemented simply by snapping in. The fastener advantageously replaces a screw system, which avoids the use of a screw driving machine, and makes it possible to save time during the assembly.

This fastener, which comprises two parts, can be produced from one or two materials. In the case when it is produced from one material, the two parts of the fastener are produced independently from one another and then assembled. This is the case in particular for the embodiments in FIGS. 1 to 18 of document FR-A1-3 020 099. If it is produced from two materials, it can be envisaged for the fastener to be produced by overmolding of a part produced from a first material on the other part produced from a second material. The two materials are necessary in this case such that the difference of contraction of these molded materials makes it possible to generate sufficient gaps between the parts, which are necessary for the functioning of the fastener, and in particular the torsion of its torsion bar. This is the case in particular for the embodiments in FIGS. 19 to 24 of document FR-A1-3 020 099.

For reasons of costs and simplification of the production method in particular, it is advantageous to use a single material for production of the two parts of the fastener, but also to produce these parts simultaneously for example by injection molding.

The present invention proposes an improvement of the fastener with a torsion bar, which makes it possible to fulfil the aforementioned needs simply, efficiently and economically.

### SUMMARY OF THE INVENTION

For this purpose, the invention proposes a fixing fastener with a torsion bar which is designed to be inserted in an orifice in an element to be fixed, comprising an assembly of a body and a core,
- the body comprising:
- a part for support on said element to be fixed; and
   - a part for engagement in said orifice according to an axis of insertion;
- the core comprising:
   - a torsion bar which has an elongate form and can be resiliently deformed in torsion around its axis of elongation;
   - at least one cam surface which extends around said axis of elongation, and is configured to cooperate with a peripheral edge of said orifice, so that the insertion of the fastener in said orifice gives rise to twisting of said bar, said at least one cam surface being linked to a relief surface which is configured to cooperate with said peripheral edge, in order for said bar to adopt once more a substantially strain-free position at the end of insertion of the fastener in said orifice, and of locking of the fastener opposite said element; and
   - a head which is configured to be engaged with a torsion tool of said bar, in order to displace it at least from said locking position to a position of unlocking and withdrawal of the fastener from said orifice,
characterized in that said core is linked by a pivoting link to said body, around an axis which is substantially perpendicular to said axis of elongation or insertion.

The body and the core of the fastener according to the invention are thus linked by a pivoting link. As will be described in greater detail hereinafter, this pivoting link is used during the production or assembly of the fastener. It can be functional or non-functional. In other words, it can comprise means which can fulfil this function, but are prevented from fulfilling it. This will also be explained in greater detail hereinafter. The pivoting link is non-functional when the means which ensure this function are linked together by fusible elements. These fusible elements are obtained during production integrally with the body and the core, for example by injection molding. These fusible elements thus make it possible to produce the core and the body simultaneously and from a single material, which is advantageous in comparison with the prior art. The body and the core can be linked by fusible elements in positions in which their respective axes of insertion and elongation are not parallel or do not coincide. In this case, it is sufficient to pivot the body relative to the core in order to break the fusible elements and transform the non-functional pivoting link into a functional pivoting link. In the fitted or assembled position, the pivoting link need not be used.

The fastener according to the invention can comprise one or a plurality of the following characteristics, taken in isolation from one another or in combination with one another:
- said body forms a cage around at least part of the said core, said cage having in transverse cross-section a form which is substantially complementary with that of said orifice;
- said cage comprises two legs which are parallel to one another and to the axis of elongation or insertion, and between which there extends said body, which is linked in a pivoting manner to said legs;
- said body comprises transverse and coaxial fingers which are engaged respectively in a pivoting manner in receptacles in said legs;,
- said torsion bar is linked by the pivoting link to said body;
- a first longitudinal end of said torsion bar is linked by the pivoting link to said body, and a second longitudinal end opposite comprises said head;
- said head is configured to be engaged by snapping resiliently into a receptacle in said body, and in particular a receptacle in said support part of the body;
- said head comprises stop means which are configured to cooperate with surfaces of said receptacle, in order to limit the angular clearance of the head and the torsion bar around said axis of elongation or insertion;
- said head comprises retention means which are configured to cooperate with complementary means of said receptacle in order to block the head in a given position, for example of unlocking, around said axis of elongation or insertion;
- said body and said core are each in a single piece;
- the axes of insertion and elongation coincide, with said body and said core being independent and linked to one another by a functional pivoting link;
- the axes of insertion and elongation do not coincide, with said body and said core being formed in a single piece and linked to one another by a non-functional pivoting link.

The present invention also relates to a method for production of a fixing fastener with a torsion bar according to one of the preceding claims, comprising the steps consisting of:
- injecting a plastic material into a mold such as to form said body and said core simultaneously, such that they are linked together by a non-functioning pivoting link because of the presence of fusible link elements between said core and said body at this link;
- breaking the fusible elements such as to make the pivoting link between said core and said body functional.

The fusible elements can be broken by pivoting of the core relative to the body around said transverse axis.

When the pivoting link is non-functional, said axes of elongation and insertion need not coincide, and can for example be at an angle of between 90 and 180°.

### DESCRIPTION OF THE DRAWINGS

The invention will be better understood, and other details, characteristics and advantages of it will become more apparent from reading the following description provided by way of non-limiting example, and with reference to the appended drawings in which:
FIGS. 1 and 2 are schematic views in perspective of a fastener according to the invention and an element to be fastened, and show respectively steps of insertion of the fastener in an orifice in the element to be fastened;
FIG. 3 is a schematic view in perspective of the fastener in FIGS. 1 and 2;
FIG. 4 is a schematic view in perspective of a core of the fastener in FIGS. 1 and 2;
FIG. 5 is a schematic view in perspective of a cage of the fastener in FIGS. 1 and 2;
FIGS. 6 and 7 are schematic views in perspective of the fastener in FIGS. 1 and 2, and show respectively two positions of a head of the fastener around an axis of elongation or insertion of the fastener;
FIGS. 8a to 8c are schematic views in perspective of the fastener in FIGS. 1 and 2, and show steps of fitting or assembly of the fastener after production, according to a first embodiment;
FIGS. 9a to 9c are schematic views in perspective of the fastener in FIGS. 1 and 2, and show steps of fitting or assembly of the fastener after production, according to a second embodiment;
FIGS. 10a and 10b are highly schematic views of a pivoting link, which is respectively functional and non-functional;
FIGS. 11 to 13 are schematic views in perspective of a fastener according to a variant embodiment of the invention, and show two positions of a head of the fastener around an axis of elongation or insertion of the fastener; and
FIGS. 14 and 15 are schematic views of a motor vehicle panel fixed by means of fasteners according to the invention.

### DETAILED DESCRIPTION

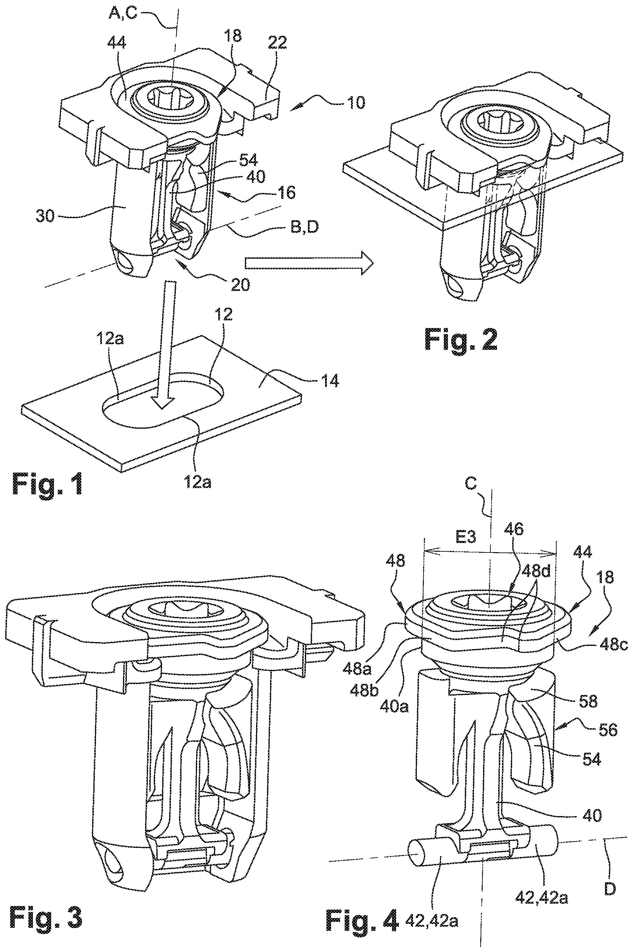

FIGS. 1 to 9c represent a first embodiment of a fastener 10 with a torsion bar according to the invention.

The fastener 10 is designed to be inserted in an orifice 12 in an element to be fixed 14, such as a panel of a motor vehicle. In the example represented, the orifice 12 has a generally oblong or oval form, but could have any other form (wave, square, any other, etc.).

The fastener 10 comprises an assembly of two units, i.e. a body 16 and a core 18. As will be described in detail hereinafter, the body and the core are linked by a pivoting link 20, which is functional in the assembly position in FIGS. 1 to 3.

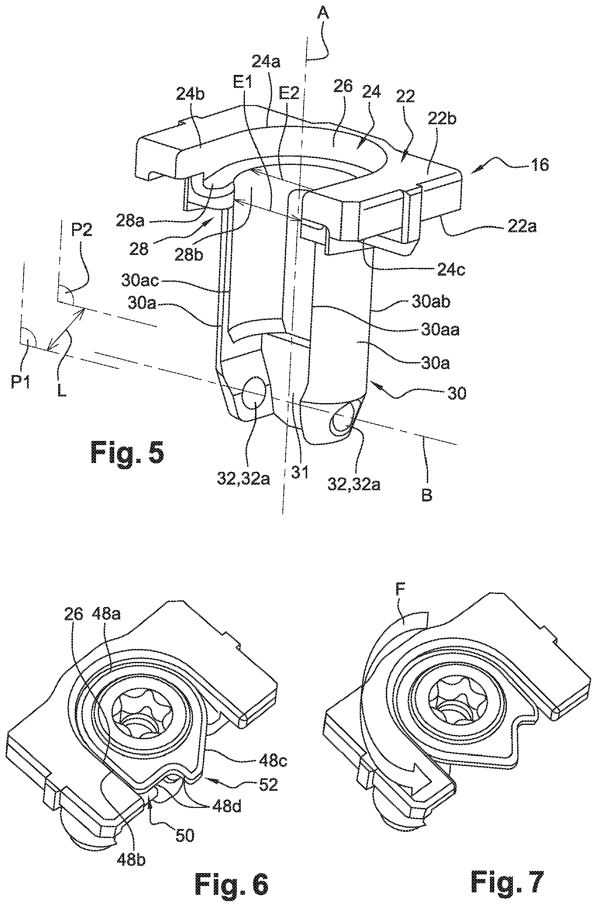

The body 16 is represented alone and can be seen better in FIG. 5, and the core 18 is represented alone and can be seen better in FIG. 4.

The body 16 comprises a part for support on the element to be fixed 14 and a part for engagement in the orifice 12 according to an axis of insertion A.

In this case, the support part comprises a collar 22 which has a generally parallelepiped form, but could have any form. The collar 22 comprises a lower face 22a which is designed to face the element 14, and an upper face 22b. The collar can comprise on its face 22a means for projection which are designed to be engaged in recesses with a complementary form in the element 14, or in a part which is designed to be interposed between the collar and the element 14.

The collar 22 also comprises a receptacle 24 which extends according to the axis A, substantially perpendicularly to the plane of the collar. The receptacle 24 opens on its faces 22a, 22b, as well as on one of the large sides of the collar. The receptacle has the general form of a "C" or a "U", and comprises a curved peripheral edge 24a which extends around approximately 180°, and is linked at its circumferential ends respectively to two straight and substantially parallel peripheral edges 24b, 24c. The receptacle 24 comprises a peripheral surface 26 which extends around the axis A, and along the edges 24a, 24b, 24c. The surface 26 extends between the upper face 22b and a surface 28a of a peripheral rim 28 which extends radially towards the interior of the axis A, along the edges 24a, 24b, 24c. The surface 28a is oriented upwards and substantially parallel to the face 22b. The surface 26 is perpendicular to the face 22 and to the surface 28a.

The rim 28 has a general form of a "C" and defines at its opening a transverse distance E1 which is smaller than the maximum inner diameter E2 of this rim.

In this case, the engagement part comprises a cage 30 which extends downwards from the collar 22 along the axis A. The cage 30 comprises two legs 30a which are parallel and diametrically opposite relative to the axis A. The legs 30a extend downwards from the collar 22, and more particularly from the rim 28. The legs 30a each have a curved form around the axis A, and each comprise an inner radial surface 30ac which is aligned axially with an inner radial surface 28b of the rim, the upper end of which is linked to the surface 28a.

The legs 30a each comprise a front longitudinal edge 30aa and a rear longitudinal edge 30ab. The legs 30a are linked to one another at their free lower ends by a transverse wall 31 which extends substantially between the rear edges 30ab.

P1 indicates a first longitudinal plane parallel to the axis A, and passing via the edges 30aa of the legs 30, and P2 indicates a second longitudinal plane parallel to the axis A, and passing via the edges 30ab of the legs 30. The transverse distance between the planes P1 and P2 is indicated as L, and corresponds to the width of the cage 30.

The legs 30a each comprise a transverse orifice 32 at their free lower ends. The orifices 32 in the legs 30a are coaxial. The axis of the orifices 32a is indicated as B, and is substantially perpendicular to the axis A. In the example represented, the orifices 32 open transversely on both sides of the legs 30a. They each have a generally substantially cylindrical form, and thus each comprise an inner cylindrical surface 32a. The orifices 32 form first pivoting link means 20.

The core 18 (FIG. 4) comprises a torsion bar 40 with an elongate form along an axis of elongation C. The torsion bar 40 can be resiliently deformed in torsion around the axis C, with a given angular clearance, for example of approximately 40-45°.

The torsion bar 40 can have a substantially circular form in transverse cross-section, or the form of a cross as in the example represented. It is linked at its lower longitudinal end to second pivoting link means 20. These second means in this case comprise two diametrically opposite and coaxial fingers 42. The axis of the fingers 42 is in this case indicated as D. The fingers 42 each comprise an outer cylindrical surface 42a which extends around the axis D. The fingers 42 have their radially outer ends free.

The torsion bar 40 has its upper longitudinal end linked to a head 44 with a substantially cylindrical general form with an axis C. At its upper end the head 44 comprises an indentation 46, which in this case is female, with a form complementary with a tool (not represented) for twisting the bar 40. In a conventional manner, the tool comprises an end piece for engagement in the indentation 46 and with the head. The indentation 46 is of the "star" type in the example represented.

The head 44 comprises a peripheral rim 48 which extends radially towards the exterior relative to the axis C. This rim 48 is designed to be received in the receptacle 24, and to cooperate by sliding with its surfaces 26, 28a. The rim 48 comprises a peripheral surface 48a which extends around the axis C, and is designed to be opposite the surface 26 of the receptacle 24. This surface 48a extends by approximately 180° around the axis C. One of the circumferential ends of this surface 48a is linked to a straight peripheral surface 48b. The other circumferential end of the surface 48a is linked to a straight peripheral surface 48c. The surfaces 48b, 48c are inclined and linked to one another by a peripheral surface at L 48d, the hollow corner of which is oriented radially towards the interior, as can be seen better in FIGS. 6 and 7. The surfaces 48b and 48d delimit a first outer radial lug 50 of the head, and the surfaces 48c and 48d delimit a second outer radial lug 52 of the head. The lugs have radii which are substantially identical from the axis C.

As represented in FIGS. 6 and 7, the surface 48b can be placed opposite the surface 26 of the receptacle 24, substantially parallel to it and at a short distance from it. The head 44 can abut by means of its surface 48b the surface 26 of the receptacle (FIG. 6). The surface 48c can be placed opposite the surface 26 of the receptacle, substantially parallel to it and a short distance from it (FIG. 7). The head 44 can also abut by means of its surface 48c the surface 26 (FIG. 7).

The head 44 comprises an outer cylindrical surface 40a which is designed to be opposite the surface 28b of the rim 28. At this surface 40a, the head comprises a diameter E3 which is slightly smaller than the diameter E2, in order to permit rotation of the head in the receptacle 24 (FIGS. 6 and 7). Furthermore, E3 is larger than E1, such that the head can be engaged in the receptacle 24 by being snapped in resiliently, during which operation the free circumferential ends of the rim 28 are spaced slightly from one another (E1 increases to E3) when the head 44 passes through.

The core 18 also comprises at least one cam surface 54 or ramp, and in this case two in the example represented. The cam surfaces 54 extend substantially in the form of a helix around the axis C. In this case they are diametrically opposite, and supported by projecting portions 56 of the torsion bar 40. The portions 56 extend over most of the length of the bar 40 (approximately 60 to 90% in the example represented).

As can be seen in FIG. 1, the free lower ends of the portions 56 (which are linked to the torsion bar 40 by their upper ends) extend in the inter-leg space 30a, and are thus contained between the planes P1 and P2. The portions 56 pass through these planes P1, P2, and their upper ends are situated on the exterior of the inter-leg space 30a.

The portions 56 are substantially symmetrical relative to the axis C.

The upper ends of the portions 56 are situated spaced axially from the head 44, and each comprise an end radial surface 58 which is oriented upwards. The surfaces 58 form relief surfaces which are linked to the cam surfaces 54. The axial distance between these surfaces 58 and the lower face of the rim 48 is determined such that the element 14, or other parts on which the element is to be fixed, can be interposed between these surfaces. In other words, the thickness of the element, or the cumulative thickness of the element and the part(s) on which it is placed is at the most equal to the aforementioned axial distance. This allows the relief surfaces 58 to be placed opposite a lower face of the element or part, and to ensure axial retention of the fastener 10 relative to the element 14.

FIGS. 1 and 2 show the body 16 and the core 18 in their assembly position and ready to be used. As can be seen, the axes A and C on the one hand and B and D on the other hand substantially coincide. The core 18 extends inside the body 16 and in particular its torsion bar 40 extends between the legs 30a. The fingers 42 of the core are engaged in the orifices 32 in the body, and form the pivoting link 20, which in this case is functional, i.e. the surfaces 42a of the fingers can cooperate by sliding with the surfaces 32a of the orifices in order to guide the body in rotation around the axis B, D. The head 44 of the body is received in the receptacle 24, by being resiliently snapped in, its rim 48 being able to cooperate by sliding via its surfaces 48a, 48b, 48c with the surface 26 of the receptacle during the torsion of the bar 40 around the axis A, C.

In the position without constraint or of locking represented in FIGS. 1 to 3 and 6, the surface 48b is parallel to the surface 26 opposite the receptacle 24. The torsion bar 40 is not constrained, and the cam surfaces 54 pass through the planes P1, P2, as previously described. In the constrained or unlocked position represented in FIG. 7, the surface 48c is parallel to the surface 26 opposite the receptacle 24. The torsion bar 40 is constrained in torsion and the cam surfaces 54 are contained in the inter-leg space 30a, i.e. between the planes P1 and P2.

FIGS. 1 and 2 represent the steps of insertion of the fastener 10 in the orifice 12 in the element 14, and FIGS. 6 and 7 represent steps of dismantling of the fastener from this element.

With reference to FIGS. 1 and 2, a first step consists of aligning the axis A, C with the axis of the orifice 12, with the aforementioned planes P1, P2 being oriented parallel to the straight longitudinal edges 12a of the orifice 12. The fastener 10 is then displaced in translation along the axis A, C until its cage 30 is inserted in the orifice 12. The cam surfaces 54 are then supported on the longitudinal edges 12a. When the translation of the fastener 10 is continued, the force applied to the fastener along the axis A, C leads to sliding of the cam surfaces 54 on the edges 12a and to twisting of the torsion bar 40 because of the driving of the portions 56 around the axis A, C. The fitting of the fastener and thus the aforementioned translation can be carried out manually, and therefore without a particular tool. The twisting of the bar 40 gives rise to angular displacement of the head 44 around the axis A, C. When the relief surfaces 58 can slide below the surface of the element 14 or of a part on which the element is fixed, the portions 56 regain their initial position, and the torsion bar 40 adopts a strain-free position once more. The element is then fixed by the fastener, and the fastener is in the locking position as represented in FIG. 2, with the relief surfaces 58 being able to cooperate by axial support with the element of part on which it is fixed, in order to prevent involuntary withdrawal of the element from this part.

With reference to FIGS. 6 and 7, after the aforementioned tool has been engaged with the head 44 of the fastener, the head 44 is displaced in rotation around the axis A, C until the surface 48c abuts the surface 26 opposite the receptacle 24, or is parallel to the latter (arrow F in FIG. 7). This allows the cam surfaces 54 to be accommodated entirely in the inter-leg space 30a, as previously described. The relief surfaces 58 then no longer impede the withdrawal of the fastener 10, by axial translation along the axis A, C.

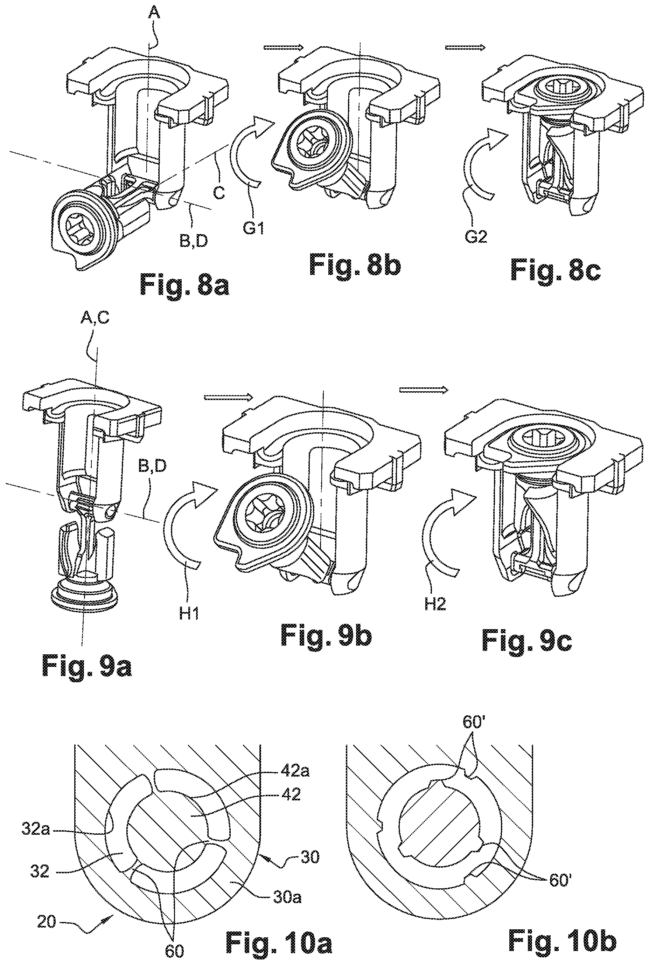

FIGS. 8a-8c and 9a-9c illustrate respectively two embodiments of production of the fastener 10. According to these embodiments, the body 16 and the core 18 are made in a single piece and preferably using a single material, preferably plastic, for example POM.

The body 16 and the core 18 can be produced by injection molding in a mold in which the body and the core are created whilst being in a non-assembled position. In other words, contrary to the position of use of the fastener represented in FIG. 1, in which the axes A and C coincide, these axes do not necessarily coincide during the injection molding of the fastener.

In the embodiment in FIGS. 8a to 8c, the axes A and C are at 90° to one another, and are therefore do not coincide. The core must therefore be displaced in rotation around the axis B, D by an angle of 90° until the head 44 of the fastener engages by snapping resiliently into the receptacle 24 in the collar (arrows G1, G2).

In the variant embodiment in FIGS. 9a to 9c, the axes A and C coincide, but the head 44 of the core is diametrically opposite relative to the receptacle 24 in the collar, in relation to the axis B, D. The core must therefore be displaced in rotation around the axis B, D by an angle of 180°, until the head 44 engages in the receptacle 24 (arrows H1, H2).

After the removal of the fasteners 10 from the mold, they are in the positions in FIGS. 8a and 9a. In this position, it will be understood that, because of the simultaneous creation of the body 16 and the core 18, these two parts are linked together by bridges of material. As can be seen in the drawings, the area of linking between the body and the core in this position is situated at the pivoting link 20. It will thus be appreciated that the bridges of material are situated at the pivoting link 20, and more specifically between the fingers 42 of the core and the orifices 32 in the body.

FIGS. 10a and 10b show the bridges of material between the fingers 42 and the inner surfaces 32a of the orifices 32. These bridges of material form fusible elements 60. In the positions represented in FIGS. 8a and 9a, the pivoting link 20 is non-functional, since the fusible elements 60 are intact, and link the body and the core rigidly. In the positions represented in FIGS. 8c and 9c, the pivoting link 20 is functional, since the fusible elements 60' have been broken, and no longer prevent the cooperation of the fingers 42 with the orifices 32. The breaking of the fusible elements 60 and the transformation of the pivoting link from its non-functional state to its functional state are simply obtained by the steps in FIGS. 8b-8c and 9b-9c, consisting of making the core 28 of the fastener pivot around the axis B, D. The more fragile the bridges of material (fusible elements 60) between the body 16 and the core 18 are, the lower the force necessary for pivoting of the core relative to the body and breaking of these fusible elements 60.

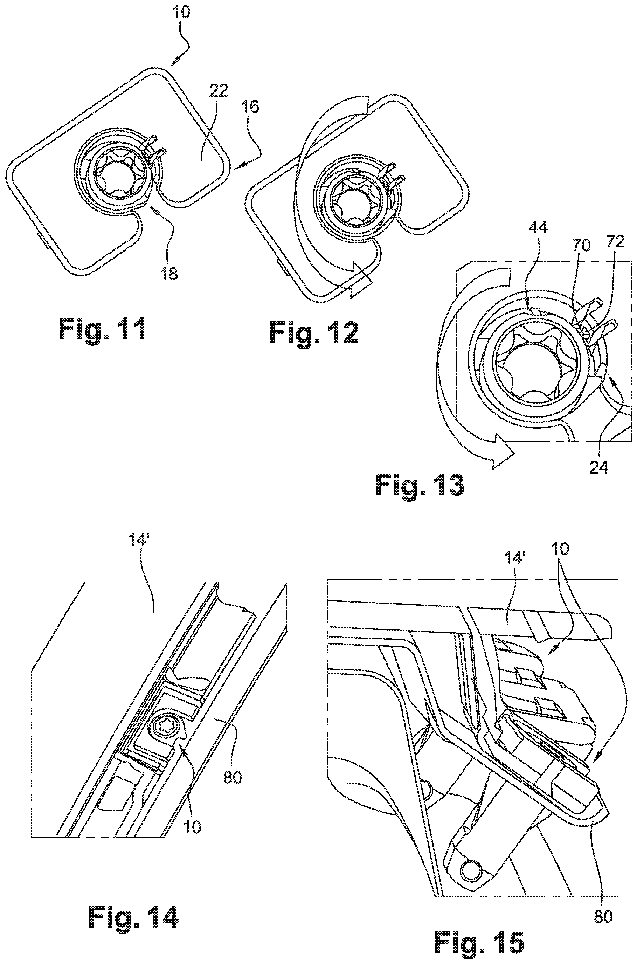

FIGS. 11 to 13 represent a variant embodiment of the invention in which the core 18 of the fastener comprises means for retention which are configured to cooperate with complementary means of the receptacle 24 in the collar 22 of the body, in order to block the head in a given position, for example of unlocking. This is advantageous in the case when a single element 14 is fixed by means of a plurality of fasteners 10 which must be brought into their unlocking position in order to permit their dismantling and removal of the element. The cores of the fasteners are then brought by means of the aforementioned tool for engagement with the heads, from the locking position, by default to the position of unlocking and dismantling of the fasteners.

In the example represented, the head 44 of the core 18 comprises a radially outer tooth 70 which is designed to cooperate with the radially inner tooth 72 of the receptacle 24 of the body 16. The teeth 70, 72 extend on the same plane perpendicular to the axes A, C. They can cooperate together in order to form a pressure point during the rotation of the head by means of the tool. The head is displaced in rotation by means of the tool over an angle of several degrees, and, in the vicinity of the unlocking position, the tooth 70 of the head cooperates and is supported on the tooth 72 of the receptacle until it clears the latter, thus forming the pressure point. After passage of the tooth 72, the tooth 70 remains supported on the tooth 72, and remains in this position even if the tool is withdrawn from the head 44 of the fastener. The torsion bar is then maintained in a position constrained with torsion. The fastener can then be dismantled. The tool must be engaged once more with the head of the fastener in order for the head to be returned to its original position in which the torsion bar is not constrained, by clearing the aforementioned pressure point once more.

FIGS. 14 and 15 represent an example of use of the fastener 10 according to the invention. In this case, it is used to fix a cladding panel 14' on a body upright 80 of a motor vehicle. FIG. 15 shows that a plurality of adjacent fasteners 10 can be used to fix a single panel 14' on the upright.

In a particular embodiment of the invention, the torque which is necessary for twisting of the bar 40 and passage from the locking position to the unlocking position is approximately 3N.m. The force which is necessary in order to pull off the fastener 10 after it has been placed in an orifice in an element can be approximately 50 kg.

Although it is not represented in the drawings, the fastener can also comprise a sealing skirt, made for example of elastomer material, which is over-molded or added on by being glued. It can be situated on the lower face 22a of the collar 22 of the body, such as to be supported on the element 14.

## Claims

1. Fixing fastener (10) with torsion bar (40) intended to be inserted into an orifice (12) of an element (14) to be fixed, comprising an assembly of a body (16) and of a core (18),
- the body comprising:
- a part (22) for support on said element to be fixed and
- a part (30) engaging in said orifice along an axis of insertion (A),
- the core comprising:
- a torsion bar (40) of elongate form and capable of being deformed elastically by torsion around its axis of elongation (C),
- at least one cam surface (54) extending around said axis of elongation and configured to co-operate with a peripheral edge (12a) of said orifice in order for the insertion of the fastener into said orifice to provoke a twisting of said bar, said at least one cam surface being linked to a relief surface (58) configured to co-operate with said peripheral edge in order for said bar to return to a substantially strain-free position at the end of insertion of the fastener into said orifice, and of locking of the fastener with respect to said element, and
- a head (44) configured to be engaged with a torsion tool of said bar in order to displace it at least from said locking position to a position of unlocking and of removal of the fastener from said orifice,
**characterized in that** said core is linked by a pivoting link (20) to said body about an axis (B, D) substantially at right angles to said axis of elongation or of insertion.

2. Fastener (10) according to Claim 1, in which said body (16) forms a cage (30) around at least a part of said core (18), said cage having, in cross section, a form substantially complementing that of said orifice (12).

3. Fastener (10) according to the preceding claim, in which said cage (30) comprises two legs (30a) parallel to one another and to the axis of elongation (C) or of insertion (A), and between which extends said body (16), which is pivotably linked to said legs.

4. Fastener (10) according to the preceding claim, in which said body (16) comprises transverse and co-axial fingers (42) which are respectively pivotably fitted in orifices (32) of said legs (30a).

5. Fastener (10) according to one of the preceding claims, in which said torsion bar (40) is linked by the pivoting link (20) to said body (16).

6. Fastener (10) according to the preceding claim, in which a first longitudinal end of said torsion bar (40) is linked by the pivoting link (20) to said body (16), and an opposite second longitudinal end comprises said head (44).

7. Fastener (10) according to one of the preceding claims, in which said head (44) is configured to be fitted by elastic snap-fitting into a recess (24) of said body (16), and in particular a recess of said bearing part (22) of the body.

8. Fastener (10) according to the preceding claim, in which said head (44) comprises stop means (48b, 48c) configured to co-operate with surfaces (26) of said recess (24) in order to limit the angular travel of the head and the torsion of the bar (40) around said axis of elongation (C) or of insertion (A).

9. Fastener (10) according to Claim 7 or 8, in which said head (44) comprises retaining means (70) configured to co-operate with complementary means (72) of said recess (24) in order to block the head in a determined position, for example of unlocking, around said axis of elongation (C) or of insertion (A).

10. Fastener (10) according to one of the preceding claims, in which said body (16) and said core (18) are each of a single piece.

11. Fastener (10) according to the preceding claim, in which the axes of insertion (A) and of elongation (C) co-incide, said body (16) and said core (18) being independent and linked to one another by a functional pivoting link (20).

12. Fastener (10) according to Claim 10, in which the axes of insertion (C) and of elongation (A) do not co-incide, said body (16) and said core (18) being formed of a single piece and linked to one another by a non-functional pivoting link (20).

13. Method for manufacturing a fixing fastener (10) with torsion bar (40) according to one of the preceding claims, comprising the steps consisting in:
- injecting a plastic material into a mould so as to simultaneously produce said body (16) and said core (18), so that they are linked together by a non-functional pivoting link (20) through the presence of fusible link elements (60) between the said core and the said body at the level of said link,
- breaking the fusible elements so as to render the pivoting link between said core and said body functional.

14. Method according to the preceding claim, in which the breaking of the fusible elements (60) is performed by pivoting the core (18) with respect to the body (16) about said transverse axis (B, D).

15. Method according to Claim 13 or 14 in which, when the pivoting link (20) is non-functional, said axes of elongation (C) and of insertion (A) do not co-incide and for example form an angle of between 90 and 180°.

## Patentansprüche

1. Fixierendes Befestigungselement (10) mit Torsionsstab (40), welches dafür vorgesehen ist, in eine Öffnung (12) eines zu befestigenden Elements (14) eingeführt zu werden, welches eine Anordnung eines Körpers (16) und eines Kerns (18) aufweist,
- wobei der Körper aufweist:
- einen Teil (22) zur Abstützung an dem zu befestigenden Element, und
- einen Teil (30), welcher in die Öffnung entlang einer Einführachse (A) eingreift,
- wobei der Kern aufweist:
- einen Torsionsstab (40), welcher von langgestreckter Form und in der Lage ist, durch Torsion um seine Erstreckungsachse (C) elastisch verformt zu werden,
- mindestens eine Steuerkurvenfläche (54), welche sich um die Erstreckungsachse herum erstreckt und dafür ausgelegt ist, um mit einem umlaufenden Rand (12a) der Öffnung zusammenzuwirken, um für das Einführen des Befestigungselements in die Öffnung ein Verdrehen des Stabs zu verursachen, wobei die mindestens eine Steuerkurvenfläche mit einer Freilauffläche (58) verbunden ist, welche dafür ausgelegt ist, um mit dem umlaufenden Rand zusammenzuwirken, damit der Stab in eine im Wesentlichen spannungsfreie Position am Ende des Einführens des Befestigungselements in die Öffnung zurückkehrt, und um das Befestigungselement in Bezug auf das Element zu verriegeln, und
- einen Kopf (44), welcher dafür ausgelegt ist, um mit einem Drehwerkzeug des Stabs in Eingriff gebracht zu werden, um ihn zumindest aus der Verriegelungsposition in eine Entriegelungsposition zu verlagern und das Befestigungselement aus der Öffnung zu entnehmen, **dadurch gekennzeichnet, dass** der Kern durch eine Drehverbindung (20) um eine Achse (B, D), welche im Wesentlichen rechtwinklig zu der Erstreckungs- oder Einführachse verläuft, mit dem Körper verbunden ist.

2. Befestigungselement (10) nach Anspruch 1, bei welchem der Körper (16) einen Käfig (30) um zumindest einen Teil des Kerns (18) bildet, wobei der Käfig eine Form im Querschnitt aufweist, welche die der Öffnung (12) im Wesentlichen ergänzt.

3. Befestigungselement (10) nach dem vorhergehenden Anspruch, bei welchem der Käfig (30) zwei Schenkel (30a) aufweist, welche parallel zueinander und zu der Erstreckungs- (C) oder Einführachse (A) verlaufen und zwischen denen sich der Körper (16) erstreckt, welcher drehbar mit den Schenkeln verbunden ist.

4. Befestigungselement (10) nach dem vorhergehenden Anspruch, bei welchem der Körper (16) querverlaufende und koaxiale Finger (42) aufweist, welche jeweils drehbar in Öffnungen (32) des Schenkels (30a) eingepasst sind.

5. Befestigungselement (10) nach einem der vorhergehenden Ansprüche, bei welchem der Torsionsstab (40) durch die Drehverbindung (20) mit dem Körper (16) verbunden ist.

6. Befestigungselement (10) nach dem vorhergehenden Anspruch, bei welchem ein erstes longitudinales Ende des Torsionsstabs (40) durch die Drehverbindung (20) mit dem Körper (16) verbunden ist und ein gegenüberliegendes zweites longitudinales Ende den Kopf (44) aufweist.

7. Befestigungselement (10) nach einem der vorhergehenden Ansprüche, bei welchem der Kopf (44) dafür ausgelegt ist, durch elastisches Einschnappen in eine Aussparung (24) des Körpers (16) und insbesondere eine Aussparung des Stützteils (22) des Körpers eingepasst zu werden.

8. Befestigungselement (10) nach dem vorhergehenden Anspruch, bei welchem der Kopf (44) Anschlagmittel (48b, 48c) aufweist, welche dafür ausgelegt sind, um mit Flächen (26) der Aussparung (24) zusammenzuwirken, um die Winkelbewegung des Kopfes und des Torsionsstabs (40) um die Erstreckungs- (C) oder Einführachse (A) herum zu begrenzen.

9. Befestigungselement (10) nach Anspruch 7 oder 8, bei welchem der Kopf (44) ein Haltemittel (70) aufweist, welches dafür ausgelegt ist, mit einem komplementären Mittel (72) der Aussparung (24) zusammenzuwirken, um den Kopf in einer bestimmten Position zum Beispiel zum Entriegeln um die Erstreckungs- (C) oder Einführachse (A) herum zu blockieren

10. Befestigungselement (10) nach einem der vorhergehenden Ansprüche, bei welchem der Körper (16) und der Kern (18) jeweils aus einem einzigen Stück bestehen.

11. Befestigungselement (10) nach dem vorhergehenden Anspruch, bei welchem die Erstreckungs- (C) und Einführachse (A) zusammenfallen, wobei der Körper (16) und der Kern (18) unabhängig und durch eine funktionsfähige Drehverbindung (20) miteinander verbunden sind.

12. Befestigungselement (10) nach Anspruch 10, bei welchem die Erstreckungs- (C) und Einführachse (A) nicht zusammenfallen, wobei der Körper (16) und der Kern (18) aus einem einzigen Stück gebildet und durch eine nicht funktionsfähige Drehverbindung (20) miteinander verbunden sind.

13. Verfahren zur Herstellung eines fixierenden Befestigungselements (10) mit Torsionsstab (40) nach einem der vorhergehenden Ansprüche, aufweisend die folgenden Schritte:
Einspritzen eines Kunststoffmaterials in eine Form, um gleichzeitig den Körper (16) und den Kern (18) zu erzeugen, so dass sie durch eine nicht funktionsfähige Drehverbindung (20) durch das Vorhandensein von schmelzbaren Verbindungselementen (60) zwischen dem Kern und dem Körper auf der Höhe der Verbindung miteinander verbunden sind,
Brechen der schmelzbaren Elemente, um die Drehverbindung zwischen dem Kern und dem Körper funktionsfähig zu machen.

14. Verfahren nach dem vorhergehenden Anspruch, bei welchem das Brechen der schmelzbaren Elemente (60) durch Drehen des Kerns (18) in Bezug auf den Körper (16) um die Querachsen (B, D) herum durchgeführt wird.

15. Verfahren nach Anspruch 13 oder 14, bei welchem, wenn die Drehverbindung (20) nicht funktionsfähig ist, die Erstreckungs- (C) und Einführachse (A) nicht zusammenfallen und zum Beispiel einen Winkel von zwischen 90° und 180° bilden.

## Revendications

1. Attache de fixation (10) avec une barre de torsion (40) destinée à être insérée dans un orifice (12) d'un élément (14) à fixer, comprenant en ensemble d'un corps (16) et d'un noyau (18),
- le corps comprenant :
- une partie (22) pour le support sur ledit élément à fixer et
- une partie (30) entrant en prise dans ledit orifice le long d'un axe d'insertion (A),
- le noyau comprenant :
- une barre de torsion (40) de forme allongée et capable d'être déformée élastiquement par torsion autour de son axe d'allongement (C),
- au moins une surface de came (54) s'étendant autour dudit axe d'allongement et configurée pour coopérer avec un bord périphérique (12a) dudit orifice de sorte que l'insertion de l'attache dans ledit orifice provoque un tordage de ladite barre, ladite au moins une surface de came étant reliée à une surface en relief (58) configurée pour coopérer avec ledit bord périphérique de sorte que ladite barre retourne à une position essentiellement sans déformation à la fin de l'insertion de l'attache dans ledit orifice, et de verrouillage de l'attache par rapport audit élément, et
- une tête (44) configurée pour être mise en prise avec un outil de torsion de ladite barre de manière à la déplacer au moins à partir de ladite position de verrouillage vers une position de déverrouillage et de retrait de l'attache dudit orifice,
**caractérisée en ce que** ledit noyau est relié par une liaison pivotante (20) audit corps autour d'un axe (B, D) essentiellement à angles droits par rapport audit axe d'allongement ou d'insertion.

2. Attache (10) selon la revendication 1, dans laquelle ledit corps (16) forme une cage (30) autour d'au moins une partie dudit noyau (18), ladite cage ayant, en section transversale, une forme essentiellement complémentaire de celle dudit orifice (12) .

3. Attache (10) selon la revendication précédente, dans laquelle ladite cage (30) comprend deux montants (30a) parallèles l'un à l'autre et à l'axe d'allongement (C) ou d'insertion (A), et entre lesquels s'étend ledit corps (16), qui est relié en pivotement auxdits montants.

4. Attache (10) selon la revendication précédente, dans laquelle ledit corps (16) comprend des doigts transversaux et co-axiaux (42) qui sont respectivement logés en pivotement dans des orifices (32) desdits montants (30a).

5. Attache (10) selon l'une quelconque des revendications précédentes, dans laquelle ladite barre de torsion (40) est reliée par la liaison pivotante (20) audit corps (16).

6. Attache (10) selon la revendication précédente, dans laquelle une première extrémité longitudinale de ladite barre de torsion (40) est reliée par la liaison pivotante (20) audit corps (16), et une deuxième extrémité longitudinale opposée comprend ladite tête (44) .

7. Attache (10) selon l'une quelconque des revendications précédentes, dans laquelle ladite tête (44) est configurée pour être logée par encliquetage élastique dans un retrait (24) dudit corps (16), et en particulier un retrait de ladite partie porteuse (22) du corps.

8. Attache (10) selon la revendication précédente, dans laquelle ladite tête (44) comprend des moyens d'arrêt (48b, 48c) configurés pour coopérer avec des surfaces (26) dudit retrait (24) de manière à limiter le déplacement angulaire de la tête et la torsion de la barre (40) autour dudit axe d'allongement (C) ou d'insertion (A).

9. Attache (10) selon la revendication 7 ou 8, dans laquelle ladite tête (44) comprend un moyen de retenue (70) configuré pour coopérer avec un moyen complémentaire (72) dudit retrait (24) de manière à bloquer la tête dans une position déterminée, par exemple de déverrouillage, autour dudit axe d'allongement (C) ou d'insertion (A).

10. Attache (10) selon l'une quelconque des revendications précédentes, dans laquelle ledit corps (16) et ledit noyau (18) sont chacun d'un seul tenant.

11. Attache (10) selon la revendication précédente, dans laquelle les axes d'insertion (A) et d'allongement (C) coïncident, ledit corps (16) et ledit noyau (18) étant indépendants et reliés l'un à l'autre par une liaison pivotante fonctionnelle (20).

12. Attache (10) selon la revendication 10, dans laquelle les axes d'insertion (C) et d'allongement (A) ne coïncident pas, ledit corps (16) et ledit noyau (18) étant formés d'un seul tenant et reliés l'un à l'autre par une liaison pivotante non fonctionnelle (20).

13. Procédé de fabrication d'une attache de fixation (10) avec une barre de torsion (40) selon l'une quelconque des revendications précédentes, comprenant les étapes consistant à :
- injecter un matériau plastique dans un moule de manière à produire simultanément ledit corps (16) et ledit noyau (18), de sorte qu'ils soient reliés ensemble par une liaison pivotante non fonctionnelle (20) par la présence d'éléments de liaison fusibles (60) entre ledit noyau et ledit corps au niveau de ladite liaison,
- rompre les éléments fusibles de manière à rendre la liaison pivotante entre ledit noyau et ledit corps fonctionnelle.

14. Procédé selon la revendication précédente, dans lequel la rupture des éléments fusibles (60) est réalisée par pivotement du noyau (18) par rapport au corps (16) autour dudit axe transversal (B, D).

15. Procédé selon la revendication 13 ou 14, dans lequel, lorsque la liaison pivotante (20) est non fonctionnelle, lesdits axes d'allongement (C) et d'insertion (A) ne coïncident pas et forment par exemple un angle d'entre 90 et 180°.
